# EUROPÄISCHE PATENTSCHRIFT

(11) **EP 0 915 232 B1**
(45) Veröffentlichungstag und Bekanntmachung des Hinweises auf die Patenterteilung: **26.02.2003**
(21) Anmeldenummer: 97810532.8
(22) Anmeldetag: 25.07.1997
(51) Int. Cl.: F01K 21/04, F01K 23/10

(54) **Verfahren zum Betrieb einer Kraftwerksanlage**
Process for operating a power plant
Procédé de fonctionnement d'une centrale d'énergie

(43) Veröffentlichungstag der Anmeldung: 12.05.1999
(60) Teilanmeldung: 02009180.7
(73) Patentinhaber: ALSTOM (Switzerland) Ltd, 5401 Baden (CH)
(72) Erfinder: Frutschi, Hans Ulrich, 5223 Riniken (CH)

(56) Entgegenhaltungen:
- EP-A- 0 081 996
- EP-A- 0 516 995
- DE-A- 2 138 664
- DE-A- 3 815 993
- DE-A- 4 237 665
- FR-A- 2 230 864
- GB-A- 1 085 425

## Beschreibung

### Technisches Gebiet

Die vorliegende Erfindung betrifft ein Verfahren zum Betrieb einer Kraftwerksanlage gemäss Oberbegriff de Anspruchs 1.

### Stand der Technik

Bei einer Kraftwerksanlage, welche aus einer Gasturbogruppe, einem nachgeschalteten Abhitzedampferzeuger und einem anschliessenden Dampfkreislauf besteht, ist es zur Erzielung eines Maximums an Wirkungsgrad vorteilhaft, im Dampfkreislauf einen überkritischen Dampfprozess vorzusehen.
Eine solche Schaltung ist aus CH-480 535 bekanntgeworden. In dieser Schaltung wird zum Zweck einer optimalen Abwärmenutzung der Gasturbogruppe im unteren Temperaturbereich des Abhitzedampferzeugers ein Massenstrom des Gasturbinenkreislaufmittels abgezweigt und in der Gasturbine rekuperativ genutzt.
Sowohl der Gasturbinen- als auch der Dampfprozess weisen eine sequentielle Verbrennung auf. Diese Konfiguration führt aber im Falle von modernen, vorzugsweise einwellig ausgelegten Gasturbinen zu einer unerwünschten Komplikation im konstruktiver Hinsicht.

Bei einer bekanntgewordenen Anlage, welche mit einem in Wirkverbindung mit der Verdichtereinheit stehenden Zwischenkühler ausgestattet ist, wird ein grosser Teil, oder sogar die gesamte Menge des anfallenden Heisswassers aus diesem Zwischenkühler in einen zum Dampfkreislauf gehörenden Mischvorwärmer eingeleitet. Mit dieser Vorkehrung entsteht im letztgenannten ein Wärmeüberschuss, welcher die Verdampfung eines Teils des Wassers bewirkt. Der so entstandene Dampf kann dann über eine den Unterdruck festhaltende Leitung einer Dampfturbine zugeführt werden, in welcher Arbeit geleistet wird. Eine solche Anordnung hat aber den Nachteil, dass der grossvolumige Strömungspfad des Niederdruckteils der Dampfturbine noch weiter vergrössert werden muss. Der Arbeitsgewinn dieser Dampfmenge ist relativ gering; allenfalls könnte er knapp ausreichen, um den negativen Einfluss des Zwischenkühlers auf den Wirkungsgrad der Kraftwerksanlage aufzuwiegen.

Das Dokument DE-A-42 37 665 offenbart ein Verfahren zum Betrieb einer Kombianlage. Aus der Dampfturbine stammendes Kondensat wird entweder direkt oder über einem Zwischenkühler des Verdichters zu einem Abhitzekessels, welcher mit den Abgasen der Gasturbine betrieben wird, geleitet.

Das Dokument EP-A-0 516 995 offenbart eine kombinierte Gas/Dampf-Kraftanlage, wobei hier das Kondensat aus der Dampfturbine über einen Zwischenkühler des Verdichters der Dampfturbine geleitet wird. Danach wird der entstandene Dampf wieder an einen geeigneten Punkt in die Dampfturbine eingeführt.

In der Gasturbinenanlage der GB-A-1 085 425 wird Wasser in einem Zwischenkühler des Verdichters erwärmt und in der Brennkammer weiter überhitzt, bevor es in einer Dampfturbine entspannt und in die Brennkammer der Gasturbine eingeleitet wird.

### Darstellung der Erfindung

Hier will die Erfindung Abhilfe schaffen. Der Erfindung, wie sie im unabhängigen Anspruch gekennzeichnet ist, liegt die Aufgabe zugrunde bei einem Verfahren der eingangs genannten Art eine wesentliche Steigerung der Effizienz bezüglich Arbeitsleistung zu erzielen.

Zu diesem Zweck wird dem Mischvorwärmer nur ein Teil des Heisswasser aus dem Zwischenkühler zugeführt, während der andere Teil direkt oder über eine weitere Aufwärmung der Gasturbine an geigneter Stelle, vorzugsweise stromauf der Brennkammern, zugeführt wird.

Der wesentliche Vorteil der Erfindung ist darin zu sehen, dass der durch dieses eingespritzte Heisswasser in den Brennkammem entstandene Dampf die Leistung mindestens einer Turbine der Gasturbogruppe erhöht, und damit direkt die an den Generator abgegebene Leistung. Ausserdem erhöht dieser so entstandene Dampf die Abgasmenge, so dass im Abhitzekessel auch mehr Dampf erzeugt wird. Hierzu muss selbstverständlich die Speisewassermenge entsprechend vergrössert werden, mit entsprechender Anpassung der Brennstoffzuführungen, damit das eingespritzte Heisswasser problemlos verdampfen kann, und der so entstandene Dampf auf die nominalen Heissgastemperaturen überhitzt wird.

Zwar ist es richtig, dass durch Einspritzung von kaltem Wasser vor die Brennkammer einer Gasturbine auch eine Leistungssteigerung erzielt werden kann; indessen, handelt man sich damit einen empfindlichen Rückgang des Wirkungsgrades ein, weil ja das Wasser durch Brennstoff vorgewärmt und verdampft werden muss, was exergetisch sehr ungünstig ist.

Ein weiterer wesentlicher Vorteil der Erfindung ist darin zu sehen, dass bei Gasturbinen mit sequentieller Befeuerung nur das in die erste Brennkammer eingebrachte Heisswasser durch Brennstoff verdampft werden und entsprechend der Dampf überhitzt werden muss. Beim Durchgang des so entstandenen Dampfes durch die zweite Brennkammer muss durch dortigen Brennstoff nur noch Zwischenüberhitzungswärme zugeführt werden, was exergetisch günstig ist.

Ausserdem wirkt sich die Einspritzung von Heisswasser brennstoffsparend aus, indem das Heisswasser des Zwischenkühlers vor seiner Einspritzung in einem aus thermodynamischer Sicht noch gut unterzubringenden Economizer noch weiter aufgeheizt werden kann.

Vorteilhafte und zweck mässige Weiterbildungen der erfindungsgemässen Aufgabenlösung sind in den abhängigen Ansprüchen gekennzeichnet.

Im folgenden werden anhand der beigefügten Zeichnunge ein Ausführungsbeispiel Erfindung näher erläutert. Alle für das unmittelbare Verständnis der Erfindung nicht erforderlichen Elemente sind fortgelassen worden. Die Strömungsrichtung der Medien ist mit Pfeilen angegeben.

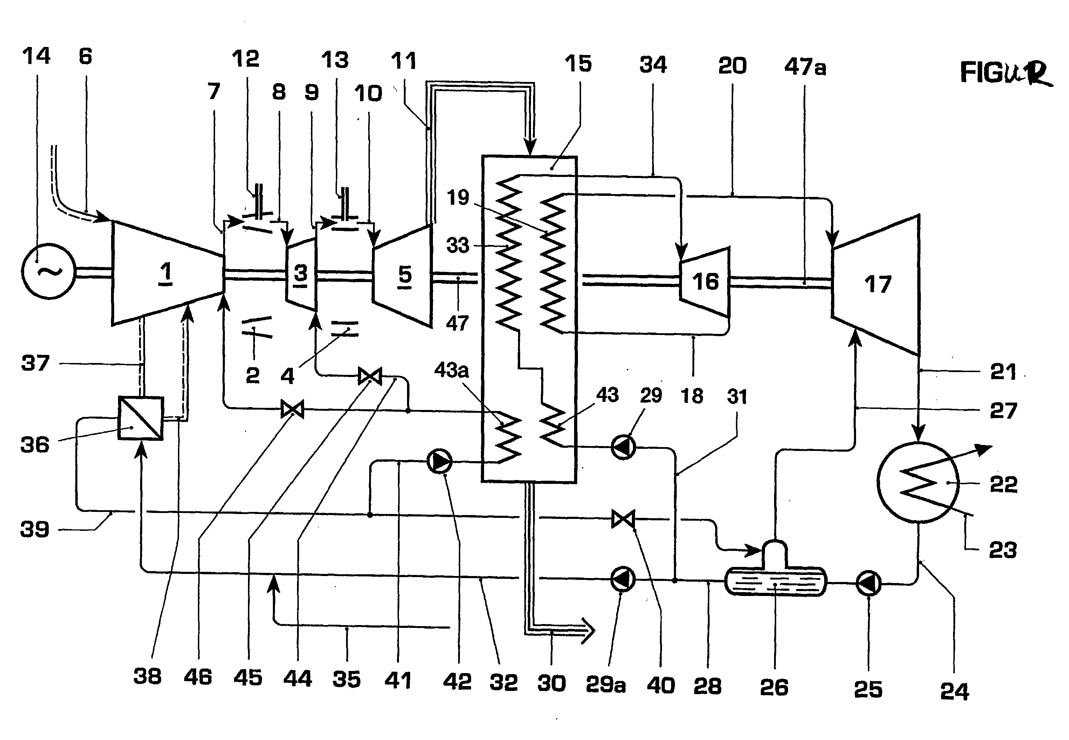

### Kurze Beschreibung der Zeichnung

Die einzige Figur zeigt:
eine Schaltung einer Kraftwerksanlage

### Wege zur Ausführung der Erfindung, gewerbliche Verwertbarkeit

Figur die enzige zeigt eine Kraftwerksanlage, welche aus einer Gasturbogruppe, einem der Gasturbogruppe nachgeschalteten Abhitzedampferzeuger, und einem diesem Abhitzedampferzeuger nachgeschalteten Dampfkreislauf besteht.

Die vorliegende Gasturbogruppe ist auf einer sequentiellen Verbrennung aufgebaut. Die in der Figur nicht ersichtliche Bereitstellung des zum Betrieb der verschiedenen Brennkammern notwendigen Brennstoffes kann beispielsweise durch eine mit der Gasturbogruppe zusammenwirkende Kohlenvergasung bewerkstelligt werden. Selbstverständlich ist es auch möglich, den zum Einsatz gelangenden Brennstoff aus einem Primämetz zu beziehen. Wird die Versorgung eines gasförmigen Brennstoffes zum Betrieb der Gasturbogruppe über eine Pipeline bereitgestellt, so kann das Potential aus der Druck- und/oder Temperaturdifferenz zwischen Primärnetz und Verbrauchemetz für die Belange der Gasturbogruppe oder allgemein der Schaltung rekuperiert werden. Die vorliegende Gasturbogruppe, die auch als autonome Einheit wirken kann, besteht aus einem Verdichter 1, einer dem Verdichter nachgeschalteten ersten Brennkammer 2, einer dieser Brennkammer 2 nachgeschalteten ersten Turbine 3, einer dieser Turbine 3 nachgeschalteten zweiten Brennkammer 4 und einer dieser Brennkammer 4 nachgeschalteten zweiten Turbine 5. Der Verdichter 1 ist mit einer Zwischenkühlung 36 ausgerüstet, in welchem ein vorgewärmetes Kondensat 32 als Wärmesenke dient und zu Heisswasser 39 aufgeheizt wird. Die genannten Strömungsmaschinen 1, 3, 5 weisen eine einheitliche Rotorwelle 47 auf. Diese Rotorwelle ist vorzugsweise auf zwei in der einzigen Figur nicht näher ersichtlichen Lagern gelagert, welche vorzugs-weise kopfseitig des Verdichters 1 und stromab der zweiten Turbine 5 plaziert sind. Auf die Zwischenkühlung wird weiter unten näher eingegangen. Die angesaugte Luft 6 wird im Verdichter 1 komprimiert und strömt dann als verdichtete Luft 7 in ein nicht näher gezeigtes Gehäuse. In diesem Gehäuse ist auch die erste Brennkammer 2 untergebracht, welche vorzugsweise als zusammenhängende Ringbrennkammer ausgebildet ist. Selbsverständlich kann die verdichtete Luft 7 zur ersten Brennkammer 2 aus einer nicht gezeigten Luftspeicheranlage beigestellt werden. Die Ringbrennkammer 2 weist kopfseitig, auf den Umfang verteilt, eine Anzahl von nicht näher gezeigten Brennern auf, welche vorzugsweise als Vormischbrenner ausgelegt sind. An sich können hier auch Diffusionsbrenner zum Einsatz gelangen. Im Sinne einer Reduzierung der Schadstoff-Emissionen aus dieser Verbrennung, insbesondere was die NOx-Emissionen betrifft, ist es indessen vorteilhaft, eine Anordnung von Vormischbrennem gemäss EP-PS-0 321 809 vorzusehen, darüber hinaus auch die dort beschriebene Art der Zuführung eines Brennstoffes 12. Was die Anordnung der Vormischbrenner in Umfangsrichtung der Ringbrennkammer 2 anbelangt, so kann eine solche bei Bedarf von der üblichen Konfiguration gleicher Brenner abweichen, und stattdessen können unterschiedlich grosse Vormischbrenner zum Einsatz Kommen. Dies geschieht vorzugsweise so, dass jeweils zwischen zwei grossen Vormischbrennem ein kleiner Vormischbrenner gleicher Konfiguration disponiert ist. Die grossen Vormischbrenner, welche die Funktion von Hauptbrennem zu erfüllen haben, stehen zu den kleinen Vormischbrennern, welche die Pilotbrenner dieser Brennkammer sind, bezüglich der sie durchströmenden Brennerluft, also der verdichteten Luft 7 aus dem Verdichter 1, in einem Grössenverhältnis zueinander, das fallweise festgelegt wird. Im gesamten Lastbereich der Brennkammer arbeiten die Pilotbrenner als selbstgängige Vormischbrenner, wobei die Luftzahl fast konstant bleibt. Die Zu- oder Abschaltung der Hauptbrenner erfolgt nach bestimmten anlagespezifischen Vorgaben. Weil die Pilotbrenner im ganzen Lastbereich bei idealem Gemisch gefahren werden können, sind die NOx-Emissionen auch bei Teillast sehr gering. Bei einer solchen Konstellation kommen die umlaufenden Stromlinien im Frontbereich der Ringbrennkammer 2 sehr nahe an die Wirbelzentren der Pilotbrenner heran, so dass eine Zündung an sich nur mit diesen Pilotbrennern möglich ist. Beim Hochfahren wird die Brennstoffmenge, die über die Pilotbrenner zugeführt wird, soweit gesteigert, bis diese ausgesteuert sind, d.h. bis die volle Brennstoffmenge zur Verfügung steht. Die Konfiguration wird so gewählt, dass dieser Punkt der jeweiligen Lastabwurfbedingungen der Gasturbogruppe entspricht. Die weitere Leistungssteigerung erfolgt dann über die Hauptbrenner. Bei der Spitzenlast der Gasturbogruppe sind sonach auch die Hauptbrenner voll ausgesteuert. Weil die durch die Pilotbrenner initiierte Konfiguration "kleiner" heisser Wirbelzentren zwischen den von den Hauptbrennem stammenden "grossen" kühleren Wirbelzentren extrem instabil ausfällt, wird auch bei mager betriebenen Hauptbrennern im Teillastbereich ein sehr guter Ausbrand mit zusätzlich zu den NOx-Emissionen niedrigen CO- und UHC-Emissionen erreicht, d.h. die heissen Wirbel der Pilotbrenner dringen sofort in die kleinen Wirbel der Hauptbrenner ein. Selbstverständlich kann die Ringbrennkammer 2 aus einer Anzahl einzelner rohrförmiger Brennräume bestehen, welche ebenfalls schrägringförmig, bisweilen auch schraubenförmig, um die Rotorachse angeordnet sind. Diese Ringbrennkammer 2, unabhängig von ihrer Auslegung, wird und kann geometrisch so angeordnet werden, dass sie auf die Rotorlänge praktisch keinen Einfluss ausübt. Die Heissgasen 8 aus dieser Ringbrennkammer 2 beaufschlagen die unmittelbar nachgeschaltete erste Turbine 3, deren kalorisch entspannende Wirkung auf die Heissgase bewusst minimal gehalten wird, d.h. diese Turbine 3 wird demnach aus nicht mehr als zwei Laufschaufelreihen bestehen. Bei einer solchen Turbine 3 wird es nötig sein, einen Druckausgleich an den Stirnflächen zwecks Stabilisierung des Axialschubes vorzusehen. Die in der Turbine 3 teilentspannten Heissgase 9, welche unmittelbar in die zweite Brennkammer 4 strömen, weisen aus dargelegten Gründen eine recht hohe Temperatur auf, vorzugsweise ist sie betriebsspezifisch so auszulegen, dass sie sicher noch um 1000°C beträgt. Diese zweite Brennkammer 4 hat im wesentlichen die Form eines zusammenhängenden ringförmigen axialen oder quasi-axialen Ringzylinders. Diese Brennkammer 4 kann selbstverständlich auch aus einer Anzahl axial, quasiaxial oder schraubenförmig angeordneten und in sich abgeschlossenen Brennräumen bestehen. Was die Konfiguration der ringförmigen, aus einem einzigen Brennraum bestehenden Brennkammer 4 betrifft, so sind in Umfangsrichtung und radial dieses ringförmigen Zylinders mehrere in der Figur nicht näher gezeigte Brennstofflanzen disponiert. Diese Brennkammer 4 weist keinen Brenner auf: Die Verbrennung eines in die aus der Turbine 3 kommenden teilentspannten Heissgase 9 eingedüsten Brennstoffes 13 geschieht hier durch Selbstzündung, soweit freilich das Temperaturniveau eine solche Betriebsart zulässt. Ausgehend davon, dass die Brennkammer 4 mit einem gasförmigen Brennstoff, also beispielsweise Erdgas, betrieben wird, muss die Austrittstemperatur der teilentspannten Heissgase 9 aus der Turbine 3 noch sehr hoch sein, wie oben dargelegt um die 1000°C, und dies selbstverständlich auch bei Teillastbetrieb, was auf die Auslegung dieser Turbine 2 eine ursächliche Rolle spielt. Um die Betriebssicherheit und einen hohen Wirkungsgrad bei einer auf Selbstzündung ausgelegten Brennkammer zu gewährleisten, ist es eminent wichtig, dass die Flammenfront ortsmässig stabil bleibt. Zu diesem Zweck werden in dieser Brennkammer 4, vorzugsweise an der Innen- und Aussenwand in Umfangsrichtung disponiert, eine Reihe von nicht näher gezeigten Elementen vorgesehen, welche in axialer Richtung vorzugsweise stromauf der Brennstofflanzen plaziert sind. Die Aufgabe dieser Elemente besteht darin, Wirbel zu erzeugen, welche eine Rückströmzone, analog derjenige in den bereits erwähnten Vormischbrennern, induzieren. Da es sich bei dieser Brennkammer 4, aufgrund der axialen Anordnung und der Baulänge, um eine Hochgeschwindigkeitsbrennkammer handelt, bei welcher die mittlere Geschwindigkeit der Arbeitsgase grösser ca. 60 m/s ist, müssen die wirbelerzeugenden Elemente strömungskonform ausgebildet werden. Anströmungsseitig sollen diese vorzugsweise aus einer tetraederförmigen Form mit anströmungsschiefen Flächen bestehen. Die wirbelerzeugenden Elemente können entweder an der Aussenfläche und/oder an der Innenfläche plaziert sein. Selbstverständlich können die wirbelerzeugenden Elemente auch axial zueinander verschoben sein. Die abströmungsseitige Fläche der wirbelerzeugenden Elemente ist im wesentlichen radial ausgebildet, so dass sich ab dort eine Rückströmzone einstellt. Die Selbstzündung in der Brennkammer 4 muss indessen auch in den transienten Lastbereichen sowie im Teillastbereich der Gasturbogruppe gesichert bleiben, d.h., es müssen Hilfsvorkehrungen vorgesehen werden, welche die Selbstzündung in der Brennkammer 4 auch dann sicherstellen, wenn sich eine Flexion der Temperatur der Gase im Bereich der Eindüsung des Brennstoffes einstellen sollte. Um eine sichere Selbstzündung des in die Brennkammer 4 eingedüsten gasförmigen Brennstoffes zu gewährleisten, wird diesem eine kleine Menge eines anderen Brennstoffes mit einer niedrigeren Zündtemperatur beigegeben. Als Hilfsbrennstoff eignet sich hier beispielsweise Brennöl sehr gut. Der flüssige Hilfsbrennstoff, entsprechend eingedüst, erfüllt die Aufgabe, sozusagen als Zündschnur zu wirken, und ermöglicht auch dann eine Selbstzündung in der Brennkammer 4, wenn die teilentspannten Heissgase 9 aus der ersten Turbine 3 eine Temperatur unterhalb des angestrebten optimalen Niveaus von 1000°C aufweisen sollten. Diese Vorkehrung, Brennöl zur Sicherstellung einer Selbstzündung vorzusehen, erweist sich freilich immer dann als besonders angebracht, wenn die Gasturbogruppe mit stark reduzierter Last betrieben wird. Diese Vorkehrung trägt des weiteren entscheidend dazu bei, dass die Brennkammer 4 eine minimale axiale Länge aufweisen kann. Die kurze Baulänge der Brennkammer 4, die Wirkung der wirbelerzeugenden Elemente zur Flammenstabilisierung sowie die fortwährende Sicherstellung der Selbstzündung sind demnach dafür verantwortlich, dass die Verbrennung sehr rasch erfolgt, und die Verweilzeit des Brennstoffes im Bereich der heissen Flammenfront minimal bleibt. Eine unmittelbar verbrennungsspezifisch messbare Wirkung hieraus betrifft die NOx-Emissionen, welche eine Minimierung erfahren, dergestalt, dass sie nunmehr kein Thema mehr bilden. Diese Ausgangslage ermöglicht ferner, den Ort der Verbrennung klar zu definieren, was sich in einer optimierten Kühlung der Strukturen dieser Brennkammer 4 niederschlägt. Die in der Brennkammer 4 aufbereiteten Heissgase 10 beaufschlagen anschliessend eine nachgeschaltete zweite Turbine 5. Die thermodynamischen Kennwerte der Gasturbogruppe können so ausgelegt werden, dass die Abgase 11 aus der zweiten Turbine 5 noch soviel kalorisches Potential aufweisen, um damit eine hier anhand eines Abhitzedampferzeugers 15 dargestellte Dampferzeugungsstufe und Dampfkreislauf zu betreiben. Wie bereits bei der Beschreibung der Ringbrennkammer 2 hingewiesen wurde, ist diese geometrisch so angeordnet, dass sie auf die Rotorlänge der Gasturbogruppe praktisch keinen Einfluss ausübt. Des weiteren ist feststellbar, dass die zweite zwischen Abströmungsebene der ersten Turbine 3 und Anströmungsebene der zweiten Turbine 5 verlaufende Brennkammer 4 eine minimale Länge aufweist, Da ferner die Entspannung der Heissgase in der ersten Turbine 3, aus dargelegten Gründen, über wenige, vorzugsweise über nur 1 bis 2 Laufschaufelreihen erfolgt, lässt sich eine Gasturbogruppe bereitstellen, deren Rotorwelle 47 aufgrund ihrer minimierten Länge technisch einwandfrei auf zwei Lagern abstützbar Ist. Die Leistungsabgabe der Strömungsmaschinen geschieht über einen verdichterseitig angekoppelten Generator 14, der auch als Anwurfmotor dienen kann. Nach Entspannung in der Turbine 5 durchströmen die noch mit einem hohen kalorischen Potential versehenen Abgase 11 einen Abhitzedampferzeuger 15, in welchem in Wärmetauschverfahren verschiedentlich Dampf erzeugt wird, der dann das Arbeitsmedium des nachgeschalteten Dampfkreislaufes bildet. Die kalorisch ausgenutzten Abgase strömen anschliessend als Rauchgase 30 ins Freie.

Der Abhitzedampferzeuger 15 weist ein Rohrbündel 19 für zwischenüberhitzen Dampf auf, welches mit Mitteldruckdampf 20 eine Niederdruckturbine 17 beaufschlagt. Des weiteren weist dieser Abhitzedampferzeuger 15 ein Rohrbündel 33 auf, in welchem ein Hochdruckdampf 34 für die Beaufschlagung einer Hochdruck-dampfturbine 16 bereitgestellt wird, wobei dieser Dampf ca. 250 bar aufweist. Der aus dieser Hochdruckdampfturbine 16 entspannte Dampf 18 bildet das Medium für das Rohrbündel 19, in welchem ein Mitteldruckdampf 20 zur Beaufschlagung einer Niederdruckdampfturbine 17 bereitgestellt wird. Beide Dampfturbinen 16, 17 sind vorzugsweise auf einer Welle 47a gelagert und vorzugsweise über eine nicht gezeigte Kupplung mit der Rotorwelle 47 der Gasturbogruppe gekoppelt. Eine autonome Einheit der Dampfgruppe mit einem weiteren Generator ist auch möglich. Es ist auch möglich, die Hochdruckdampfturbine 16 mit erhöhter Drehzahl zu betreiben und über Getriebe oder Umrichter anzukoppeln.

Der in der Niederdruckampfturbine 17 entspannte Dampf 21 wird in einem was-ser- oder luftgekühlten (23) Kondensator 22 kondensiert. Durch eine stromab dieses Kondensators 22 wirkende Kondensatpumpe 25 wird das Kondensat 24 in einen Speisewasserbehälter und Entgaser 26 gefördert, welcher auch als Mischvorwärmer bekannt ist. In ihm wird das Kondensat 24 durch die Zufuhr von Heisswasser 39 auf etwa 60°C vorgewärmt. Ein Regelorgan 40 dosiert die Heisswassermenge so, dass in der Druckhalteleitung 27 der Dampf gerade stagniert. Das Kondendat 28 aus dem Entgaser 26 wird aufgeteilt und über entsprechende Förderpumpen 29, 29a weiterbefördet. Ein Teil 31 dieses Kondensats 28 bildet die Menge, welche durch einen stromauf des Rohrbündels für überhitzten Hochdruckdampf 33 wirkenden Economizer 43 geleitet wird, wobei diese Menge der Menge des entspannten Dampfes 21 aus der Niederdruckdampfturbine 17 entspricht. Der andere Teil des Kondensats 28 strömt über eine Leitung 32 zu einem in Wirkverbindung mit dem Verdichter 1 stehenden Zwischenkühler 36. Durch Wärmeabgabe der teilverdichteten Luft 37 im Zwischenkühler 36 wird das Kondensat 32 zu Hochdruck-Heisswasser 39 aufbereitet, wobei die gekühlte teilverdichtete Luft 38 in den Verdichter 1 zur weiteren druckmässigen Aufbereitung zurückströmt. Etwa das halbe Heisswasser 39 aus dem Zwischenkühler 36 wird vor Einströmung in den Entgaser 26 abgezweigt und mittels einer Förderpumpe 42 über einen weiteren Economizer 43a im Abhitzedampferzeuger 15 geleitet und anschliessend bis kurz vor den Siedepunkt weitererhitzt als Heisswasser 44 in die Gasturbogruppe an passender Stelle eingeleitet. In der Figur ist ersichtlich, dass dieses Heisswasser 44 über verschiedene Regelorgane 45, 46 in verschiedene Aggregate der Gasturbogruppe parallel eingespritzt werden kann, wobei seriegehaltene Strömungspfade bei der Einbringung dieses Heisswassers 44 auch möglich sind. Es ist denkbar, dass das Medium (39) Stromauf einer und/oder in eine Brennkammer eingebracht wird Weiter kann auch das Medium (39) mit einer Trennstaffmenge angereichert werden. Die Menge dieses durch Einspritzung verbrauchten Heisswassers 39 wird stromauf des Zwischenkühlers 36 durch eine entsprechende Menge Zusatzwasser 35 ersetzt. Die Vorwärmung im Zwischenkühlers 36-wird bei dessen thermodynamisch optimalen Plazierung bei einem gesamten Druckverhältnis von et-wa 30:1 auf ca. 130°C gebracht. Im bereits erwähnten Economizer 43a wird dann das Heisswasser. Die 39 noch bis auf etwa 200°C weitererhitzt. Unter diesen Bedingungen strömt dem Entgaser 26 etwa gerade soviel Heisswasser 39 aus dem Zwischenkühler 36 zu, dass die Vorwärmung des dort einströmenden Kondensats 24 erfolgen kann. Bei einer solchen ausgeglichenen Bilanz stagniert demzufolge die durch die Druckhalteleitung 27 strömende Dampfmenge in die Niederdruckdampfturbine 17, wobei hiermit nur für die Stabilisierung des Unterdruckes im Mischvorwärmer 26 gesorgt wird. Bei vom Auslegungspunkt abweichenden Betriebsbedingungen holt sich der Mischvorwärmer 26 automatisch Vorwärmedampf aus der genannten Dampfturbine 17, oder liefert Flashdampf dorthin.

Der Wasserverbrauch für die zusätzliche gewonnene Leistung durch den Zwischenkühler 36 des Verdichters 1 und durch die Einspritzung einer Dampfmenge 44 in die Gasturbine entspricht etwa dem Wasserverbrauch eines Verdunstungskühlturms eines modernen Kraftwerkes entsprechender Leistung

### Bezugszeichenliste

- 1: Verdichter
- 2: Erste Brennkammer
- 3: Erste Turbine
- 4: Zweite Brennkammer
- 5: Zweite Turbine
- 6: Ansaugluft
- 7: Verdichtete Luft
- 8: Heissgase
- 9: Teilenspannte Heissgase
- 10: Heissgase
- 11,11a: Abgase
- 12: Brennstoff
- 13: Brennstoff
- 14: Generator
- 15: Abhitzedampferzeuger
- 16: Hochdruckdampfturbine
- 17: Niederdruckdampfturbine
- 18: Teilentspannter Dampf
- 19: Rohrbündel für zwischenüberhitzten Mitteldruckdampf
- 20: Mitteldruckdampf
- 21: Entspannter Dampf aus der Niederdruckdampfturbine
- 22: Kondensator
- 23: Kühlungsmedium für 22
- 24: Kondensat vor Mischvorwärmer
- 25: Kondensatpumpe
- 26: Speisewasserbehälter und Entgaser, Mischvorwärmer
- 27: Druckhalteleitung für den Mischvorwärmer 26
- 28: Kondensat nach Mischvorwärmer
- 29, 29a: Speisepumpen, Förderpumpen
- 30: Rauchgase
- 31: Kondensat nach Mischvorwärmer
- 32: Kondensat nach Mischvorwärmer
- 33: Rohrbündel für überkritischen Hochdruckdampfmenge
- 34: Hochdruckdampf
- 35: Zusatzwasser
- 36: Zwischenkühler
- 37: Teilverdichtete Luft
- 38: Gekühlt, teilverdichtete Luft
- 39: Hochdruck-Heisswasser
- 40: Regelorgan
- 41: Heisswasser
- 42: Förderpumpe
- 43, 43a: Economizer
- 44: Einspritzwasser
- 45, 46: Regelorgane
- 47, 47a: Rotorwelle
- 48: Wärmetauscher
- 49: Saugzuggebläse
- 50: Rauchgase
- 51: Ausflashkaskade
- 52: Erste Flasche
- 53: Ueberdruckdampf
- 54: Ejektor
- 55: Zweite Flasche
- 56: Abdampf des Ejektors 54
- 57, 58: Drosselorgane

## Patentansprüche

1. Verfahren zum Betrieb einer Kraftwerksanlage, im wesentlichen bestehend aus einer Gastubogruppe, einem der Gasturbogruppe nachgeschalteten Abhitzedampferzeuger (15) und einem dem Abhitzedampferzeuger (15) nachgeschalteten Dampfkreislauf, wobei die Gasturbogruppe aus mindestens einer Verdichtereinheit (1) mit mindestens einem Zwischenkühler (36), mindestens einer Brennkammer (2, 4), mindestens einer Turbine (3, 5) und mindestens einem Generator (14) oder einer Last besteht, wobei die Abgase (11) aus der letzten Turbine (5) den Abhitzedampferzeuger (15) durchströmen, in welchem die Erzeugung mindestens eines Dampfes zum Betreiben mindestens einer zum Dampfkreislauf gehörenden Dampfturbine (16, 17) bewerkstelligt wird, wobei ein Teil des aus der letzten Dampfturbine (17) anfallenden Kondensats (32) in dem Zwischenkühler (36) zu einem heissen Medium (39, 41) aufbereitet wird,
**dadurch gekennzeichnet, dass**
dieses Medium in den Kreislauf der Gasturbogruppe eingebracht wird, und dass stromauf des Zwischenkühlers (36) ein Zusatzwasser (35) in das Kondensat (32) eingeleitet wird.

2. Verfahren nach Anspruch 1, **dadurch gekennzeichnet, dass** das Medium (39) direkt in die Gasturbogruppe eingebracht wird.

3. Verfahren nach Anspruch 1, **dadurch gekennzeichnet, dass** das Medium (39) nach einer weiteren Aufwärmung (43a) in die Gasturbogruppe eingebracht wird.

4. Verfahren nach Anspruch 1, **dadurch gekennzeichnet, dass** das Medium (39) ein Heisswasser ist.

5. Verfahren nach Anspruch 1, **dadurch gekennzeichnet, dass** sich das Medium (39) aus einem Heisswasser/Dampf-Gemisch zusammensetzt.

6. Verfahren nach Anspruch 1, **dadurch gekennzeichnet, dass** das Medium (39) stromauf einer Brennkammer (2, 4) und/oder in diese eingebracht wird.

7. Verfahren nach Anspruch 1, **dadurch gekennzeichnet, dass** das Medium (39) mit einer Brennstoffmenge angereichert wird.

8. Verfahren nach Anspruch 1, **dadurch gekennzeichnet, dass** die weitere Aufwärmung des Mediums (41) vor dessen Einleitung in die Gasturbogruppe in einer zum Abhitzedampferzeuger (15) gehörenden Economizerstrecke (43a) vorgenommen wird.

## Claims

1. Method of operating a power station plant, essentially comprising a gas-turbine group, a waste-heat steam generator (15) connected downstream of the gas-turbine group, and a steam circuit connected downstream of the waste-heat steam generator (15), the gas-turbine group comprising at least one compressor unit (1) having at least one intercooler (36), at least one combustion chamber (2, 4), at least one turbine (3, 5), and at least one generator (14) or a load, the exhaust gases (11) from the last turbine (5) flowing through the waste-heat steam generator (15), in which the generation of at least one portion of steam is effected for the operation of at least one steam turbine (16, 17) belonging to the steam circuit, a portion of the condensate (32) collecting from the last steam turbine (17) being turned into a hot medium (39, 41) in the intercooler (36), **characterized in that** this medium is introduced into the circuit of the gasturbine group, and **in that** make-up water (35) is directed into the condensate (32) upstream of the intercooler (36).

2. Method according to Claim 1, **characterized in that** the medium (39) is introduced into the gas-turbine group directly.

3. Method according to Claim 1, **characterized in that** the medium (39) is introduced into the gas-turbine group after further heating up (43a).

4. Method according to Claim 1, **characterized in that** the medium (39) is hot water.

5. Method according to Claim 1, **characterized in that** the medium (39) is composed of a hot-water/steam mixture.

6. Method according to Claim 1, **characterized in that** the medium (39) is introduced upstream of a combustion chamber (2, 4) and/or into the latter.

7. Method according to Claim 1, **characterized in that** the medium (39) is enriched with a fuel quantity.

8. Method according to claim 1, **characterized in that** the further heating-up of the medium (41) is carried out in an economizer section (43a) belonging to the waste-heat steam generator (15) before it is directed into the gas-turbine group.

## Revendications

1. Procédé de fonctionnement d'une centrale électrique se composant essentiellement d'un groupe générateur à turbines à gaz, d'un générateur de vapeur à chaleur perdue (15) et d'un circuit de vapeur placé en aval du générateur de vapeur à chaleur perdue (15), le groupe générateur à turbines à gaz se composant d'au moins une unité de compresseur (1) avec au moins un refroidisseur intermédiaire (36), au moins une chambre de combustion (2, 4), au moins une turbine (3, 5) et au moins un générateur (14) ou une charge, les gaz d'échappement (11) s'écoulant hors de la dernière turbine (5) à travers le générateur de vapeur à chaleur perdue (15), dans lequel on réalise la production d'au moins une vapeur pour faire fonctionner au moins une turbine à vapeur (16, 17) appartenant au circuit de vapeur, une partie du condensat (32) se formant à partir de la dernière turbine (17) étant traité dans un refroidisseur intermédiaire (36) pour fournir un milieu chaud (39, 41),
**caractérisé en ce que**
ce milieu est introduit dans le circuit du groupe générateur à turbines à gaz, et **en ce qu'**en amont du refroidisseur intermédiaire (36) une eau d'appoint (35) est introduite dans le condensat (32).

2. Procédé selon la revendication 1, **caractérisé en ce que** le milieu (39) est introduit directement dans le groupe générateur à turbines à gaz.

3. Procédé selon la revendication 1, **caractérisé en ce que** le milieu (39) est introduit après un chauffage supplémentaire (43a) dans le groupe générateur à turbines à gaz.

4. Procédé selon la revendication 1, **caractérisé en ce que** le milieu (39) est de l'eau chaude.

5. Procédé selon la revendication 1, **caractérisé en ce que** le milieu (39) se compose d'un mélange d'eau chaude et de vapeur.

6. Procédé selon la revendication 1, **caractérisé en ce que** le milieu (39) est introduit en amont d'une chambre de combustion (2, 4) et/ou dans celle-ci.

7. Procédé selon la revendication 1, **caractérisé en ce que** le milieu (39) est enrichi avec une quantité de combustible.

8. Procédé selon la revendication 1, **caractérisé en ce que** le chauffage supplémentaire du milieu (41) avant son introduction dans le groupe générateur à turbines à gaz est effectué dans une section d'économiseur (43a) appartenant au générateur de vapeur à chaleur perdue (15).
